# EUROPEAN PATENT SPECIFICATION

(11) **EP 3 431 340 B1**
(45) Date of publication and mention of the grant of the patent: **12.02.2020**
(21) Application number: 18183856.6
(22) Date of filing: 17.07.2018
(51) Int. Cl.: B60R 9/055

(54) **A LOCKING DEVICE FOR A ROOF BOX**
VERRIEGELUNGSVORRICHTUNG FÜR EINE DACHBOX
DISPOSITIF DE VERROUILLAGE POUR CAISSE DE TOIT

(30) Priority: 20.07.2017 IT 201700082774
(43) Date of publication of application: 23.01.2019
(73) Proprietor: Zadi S.p.A., 41012 Carpi (Modena) (IT)
(72) Inventor: LOSCHI, Stefano, 41012 Carpi (Modena) (IT)
(74) Representative: Paparo, Aldo

(56) References cited:
- EP-A1- 0 647 545
- EP-A2- 1 592 581
- US-A- 5 845 828

## Description

The present invention relates to the sector of roof boxes for vehicles.

More in particular, the present invention relates to a locking device for roof boxes.

During a journey, especially when a long distance is travelled, it is useful to be able to carry luggage containing all personal effects which can be useful during the journey.

However, vehicles used for travelling do not always satisfy this requirement as their capacity might not be sufficient to contain the required luggage, especially if a number of people are using the same vehicle.

In order to obviate this issue roof boxes have been developed, reversibly constrainable to the vehicle so as to provide a further compartment and in this way increase the space available for transport of the luggage. However the prior art systems have some critical points which make use thereof poorly efficient.

In particular, the locking devices enabling constraining of the roof box to the vehicle are not very secure yet and not completely reliable.

In fact, during normal use of the vehicle, the vibrations produced by the motion thereof can cause a loosening of the locking device which can even cause detaching of the vehicle roof box, with potentially very serious consequences, both for the driver of the vehicle and for any other adjacent vehicles.

Devices are known which lessen this risk by use of a pin, insertable in a special through-seat of the locking device in such a way as to block movements thereof; however this solution requires the presence of an additional element which, apart from being liable to being lost, requires carrying out complex manoeuvres inside the roof box after it has been applied to the vehicle; there is still however the risk that the vibrations might cause an exit of the pin and a consequent loosening of the locking device.

Also known are further external clamping devices such as levers, which enable applying to the locking device an extra-stroke which enables reinforcing the clamping of the roof box to the vehicle; however this type of solution has the defect that, especially in a case of movement on even only slightly bumpy surfaces, the locking device loosens over time.

A further example of a device according to the preamble of claim 1, which does not fully solve the above mentioned drawbacks, is described in the prior art document n. EP1592581.

In this context, the technical task underpinning the present invention is to provide a locking device for a roof box which obviates at least some of the drawbacks in the prior art as described above.

In particular, an object of the present invention is to provide a locking device for roof boxes, able to guarantee a firm hold of the lock even for long periods of time, in an efficient and functional way.

The technical task set and the objects specified are substantially attained by a locking device for a roof box, comprising the technical characteristics as set out in one or more of the accompanying claims.

The present invention relates to a locking device for roof boxes which comprises: a first locking element adapted to be housed on a resting surface, a second locking element that is constrainable to the first locking element and movable with respect to it along a locking axis perpendicular to the resting surface and a clamping device configured to vary a relative distance between the first and second locking element and having a first end positioned above the first locking element and a second end constrained in a lower portion of the second locking element.

The first locking element is elastically deformable and comprises an expansion device configured to facilitate an expansion of the first locking element, increasing the dimensions thereof along the locking axis.

The present invention further relates to a roof box for vehicles which comprises: a box provided with a base that defines a resting surface and a plurality of locking devices made according to the present invention.

The base has a plurality of through seats each of which is adapted to house the clamping device of a respective locking device.

Further characteristics and advantages of the present invention will become clearer from the indicative and thus non-limiting description of a preferred but non-exclusive embodiment of a locking device for a roof box, as illustrated in the attached drawings, in which:
- figure 1 a is a view of a locking device for a roof box in a first position;
- figure 1b is a view of a locking device for a roof boxes in a second position;
- figure 1c is a view of a locking device for a roof boxes in a third position;
- figure 2a is a view in section of a locking device for a roof box in a first position;
- figure 2b is a view in section of a locking device for a roof box in a first position;
- figure 2c is a view in section of a locking device for a roof box in a first position;
- figure 3 is a view in section of a component of locking device for a roof box.

In the accompanying figures, reference numeral 1 denotes in its entirety a locking device for roof boxes according to the present invention.

The locking device 1 of the present invention is particularly adapted to constrain a roof box to a roof of a motor car.

In particular, the locking device 1 comprises: a first locking element 2, a second locking element 3 and a clamping device 4.

A first locking element 2 is adapted to be housed on a resting surface and is configured to be couplable to the second locking element 3.

The second locking element 3 is configured to be constrainable to the first locking element 2 so as to be movable with respect to it along a locking axis X perpendicular to the resting surface.

The second locking element 3 is preferably substantially hook shaped which is adapted to engage a bar at the bottom, for example of a vehicle, such as a motor car, on which the locking device 1 can be installed.

The clamping device 4 is configured to vary the relative distance between the first and the second locking element 2, 3.

In other words, the clamping device 4 enables mediating the movement of the second locking element 3 with respect to the first locking element 2, so as to enable, for example, locking a bar between them, thus constraining the locking device 1.

In particular, the clamping device 5 comprises a first end 4a positioned above the first locking element 2 and a second end 4b constrained in a lower portion of the second locking element 3.

For the purposes of the present description the terms at the bottom and above are used in reference to a normal use configuration of the locking device 1 in which the first locking element is arranged on the resting surface, which represents the origin of the reference system with respect to which the terms above and at the bottom are defined.

The term above means that the first end 4a is positioned superiorly to the first locking element 2 when the first locking element 2 is housed on the resting surface.

In a preferred embodiment, the first end 4a of the clamping device 4 is a screwing head and the first locking element 2 has a countershaped upper portion adapted to at least partially receive a lower portion of the screwing head.

In detail, and still in accordance with the above-cited preferred embodiment, the screwing head has an internally threaded seat and the second end 4b of the clamping device 4 is a threaded body adapted to engage said internally threaded seat and to slide inside it according to a screwing/unscrewing movement along the locking axis X.

With the purpose of guaranteeing a correct hold of the clamping device 4, and preventing it from loosening, the first locking element 2 is elastically deformable and comprises an expansion device 5 configured to expand the first locking element 2 increasing the dimensions thereof along the locking axis X.

In particular, the expansion of the first locking element 2 causes a raising, along the locking axis X and with respect to the resting surface on which the first locking element 2 is housed, of the first end 4a of the clamping device 4.

The first end 4a draws while moving the second end 4b and consequently the second locking element 3 to which it is constrained, thus further nearing it to the resting surface, reducing the distance with respect to the first locking element 2 and improving the clamping, defining an extra clamping stroke.

In greater detail, in use the clamping device 4 is activated to promote a nearing of the second locking element 3 to the first locking element 2, in such a way as to clamp a bar of a vehicle between the two locking elements 2, 3.

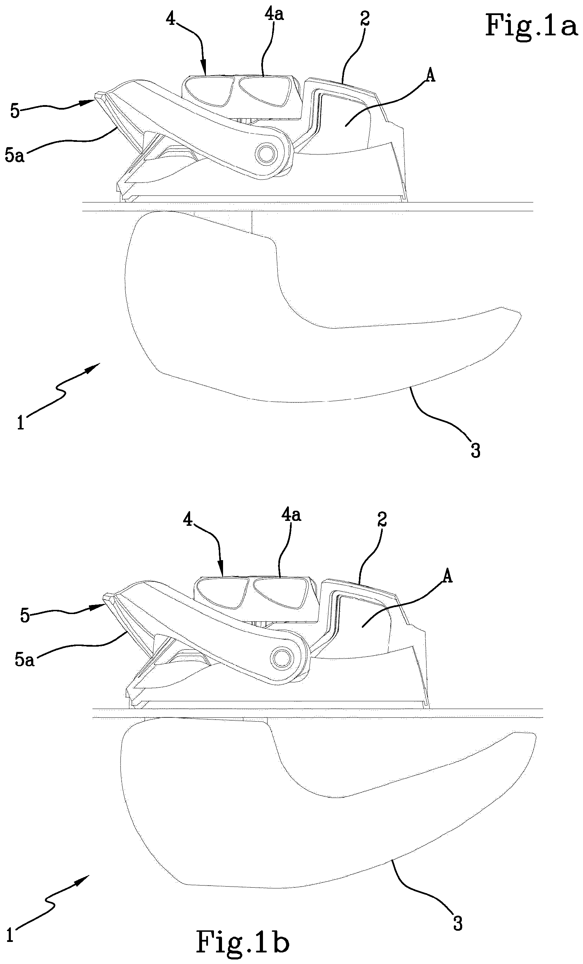

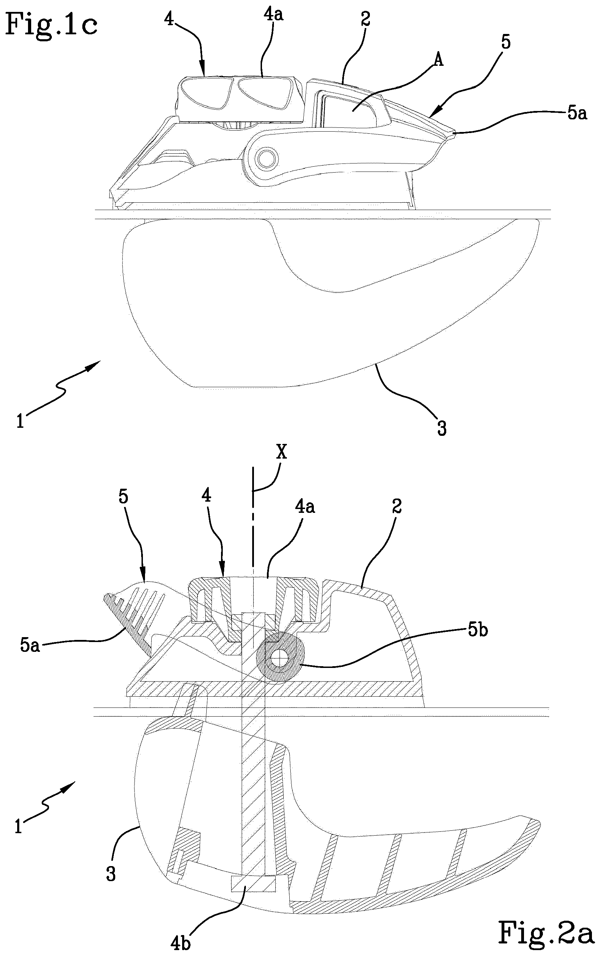

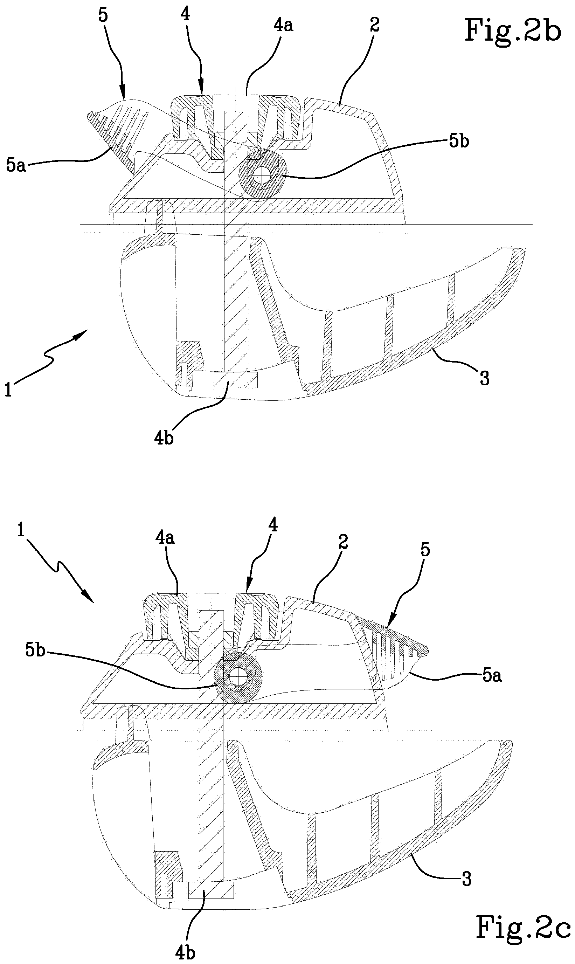

However, even after having reached a locked condition in which the force of an user is no longer sufficient to promote a further nearing of the two locking elements 2, 3, as illustrated for example in figures 1b and 2b, it is not possible to ensure that the clamping device 4 is not loosened, thus generating the risk of a detachment of the locking device 1 from the bar to which it is applied.

With the aim of guaranteeing a correct hold of the device, the expansion device 5 is activated in such a way as to promote a further nearing of the second locking element 3 to the resting surface and thus to the first locking element 2, substantially providing the extra clamping stroke which reinforces the clamping and guarantees the hold even for long periods of use.

The device according to the present invention does not therefore require the use of other components than the locking device 1 to prevent loosening thereof.

In the same way, the presence of the expansion device 5 guarantees that the provided extra stroke is stable, as it does not allow the first locking element 2 to return into the initial condition thereof, in which a loosening of the locking device might be generated over a lengthy period.

In a preferred embodiment, illustrated in the appended figures, the expansion device 5 comprises a handle 5a and a cam 5b, associated to the handle 5a.

The cam is adapted to rotate between an opening position in which the first locking element 2 is not expanded and a clamping position in which the first locking element 2 is expanded.

The handle 5a is configured to mediate the rotation of the cam 5b from the opening position to the clamping position.

In particular, the term cam means, in its entirety, an element having a body with a variable diameter defining a greater diameter, coinciding with the largest diameter definable by the body of the cam 5b, and a lesser diameter coinciding to the minimum diameter definable by the body of the cam 5b.

The cam 5b is positioned internally of the first locking element 2 and is interposed between a lower surface thereof and an upper surface thereof and in contact therewith.

In the opening position the smaller diameter of the cam 5b is positioned substantially parallel to the locking axis "X", as shown in detail in figure 2a, thus defining a minimum volume of the cam 5b internally of the first locking element 2 along the locking axis X.

In the clamping position the larger diameter of the cam 5b is positioned substantially parallel to the locking axis "X", as illustrated in detail in figure 2c, thus defining a maximum volume of the cam 5b internally of the first locking element 2 along the locking axis X, thus causing an expansion thereof along the axis.

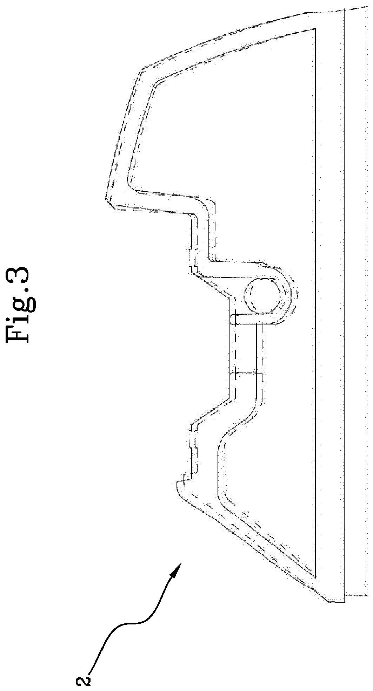

Figure 3 in particular illustrates the first locking element 2 in the opening position (broken line) and in the clamping position (unbroken line), and it can be observed that the passage from one position to the other leads to an increase in the volume of the first locking element 2 along the locking axis "X".

The locking device 1 according to the present invention can further comprise a slot "A" arranged above the handle 5a of the expansion device 5, when the cam 5b is in the clamping position, along the locking axis X. The slot "A" is configured for the insertion of a locking body, preferably a rope, adapted to prevent the movement of the handle 5a.

The locking body can advantageously be a rope, alike to those which are normally used in the sector of roof boxes for vehicles, for securing the load and preventing movement thereof during transport.

In other words, the presence of the slot "A" enables adding a further degree of safety and stability to the locking device 1.

The present invention further relates to a roof box for vehicles, for example motor cars, which comprises a box and a plurality of locking devices 1 according to what is described in the foregoing.

The roof box has a base defining the resting surface on which the locking devices 1 can be installed.

In particular, the base has a plurality of through seats each of which is adapted to house the clamping device 4 of a respective locking device 1. In other words, once the locking device 1 has been applied to the box the first coupling element 2 will be stably constrained to the base of the box above the resting surface.

On the contrary, the second coupling element 3 is movable with respect to the base of the box and positioned below the resting surface.

The clamping device 4 instead passes through the resting surface and through a through-seat afforded in the base of the box, constraining the first locking element 2 and the second locking element 3 to one another.

In a preferred embodiment, the roof box comprises two pairs of locking devices 1, each pair being adapted to stably constrain the roof box to a respective bar of a vehicle.

With the aims of accelerating the constraining operations of the roof box to the vehicle the locking devices 1 can be made in such a way that the first locking elements 2 of each locking device 1 of each pair are respectively coupled so that an expansion of the first locking element 2 of a locking device 1 causes the expansion of the first locking element 2 of the other locking device 1 of the pair.

In the same way all the locking devices 1 can be made in such a way that the first locking elements 2 of each locking device 1 of the plurality of locking devices 1 are respectively coupled so that an expansion of the first locking element 2 of a locking device 1 also causes the expansion of the first locking element 2 of every other locking device 1 of the plurality.

For example, it is possible to realise an expansion device 5 which has a single handle 5a configured to operate contemporaneously on a plurality of cams 5b belonging to different locking devices, so as to accelerate and make more efficient the activation of the locking device 5.

The locking device 1 for a roof box according to the present invention advantageously enables obviating the above-described drawbacks and problems present in the prior art devices.

In particular, the special conformation of the first locking element 1 and the presence of the expansion device 5 enable providing an efficient and secure system for guaranteeing the hold of the clamping device 1, even for long periods of time.

The locking device 1 is also advantageously impervious to the presence of vibrations during the motion of the vehicle, as the expansion of the first locking element 1 constrains the clamping device 5, preventing it from loosening.

## Claims

1. A locking device (1) for a roof box comprising:
- a first locking element (2) adapted to be housed on a resting surface;
- a second locking element (3) that can be constrained to the first locking element (2) and movable with respect to it along a locking axis (X) perpendicular to said resting surface;
- a clamping device (4) configured to vary a relative distance between said first and second locking element (3) performing a clamping stroke of the second locking element (3) and having a first end (4a) positioned above the first locking element (2) and a second end (4b) constrained in a lower portion of the second locking element (3);
**characterised in that** said first locking element (2) is elastically deformable and comprises an expansion device (5) configured to expand said first locking element (2) increasing its dimensions along said locking axis (X) to obtain an extra clamping stroke.

2. The device according to claim 1 wherein said expansion device (5) comprises a handle (5a) and a cam (5b), associated with said handle (5a), adapted to rotate between an opening position in which the first locking element (2) is not expanded and a clamping position in which the first locking element (2) is expanded, said handle (5a) being configured to mediate the rotation of said cam (5b) from the open position to the clamping position.

3. The device according to claim 2 wherein the first locking element (2) has an internal cavity delimited by a lower surface and an upper surface and said cam (5b) is arranged internally to the cavity and interposed between the lower surface and the upper surface in contact therewith.

4. The device according to claim 2 or 3 wherein the first locking device (2) has a slot (A) arranged above the handle (5a) of the expansion device (5), when the cam (5b) is in the clamping position, along the locking axis (X) and configured for the insertion of a locking body, preferably a rope, adapted to prevent the movement of the handle (5a).

5. The device according to one or more of the preceding claims wherein the first end (4a) of the clamping device (4) is a screwing head and the first locking element (2) has a countershaped upper portion adapted to receive at least partially a lower portion of said screwing head.

6. The device according to claim 5 wherein the screwing head has an internally threaded seat and the second end (4b) of the clamping device (4) is a threaded body adapted to engage said internally threaded seat and to slide inside it according to a screwing/unscrewing movement along the locking axis (X).

7. The device according to one or more of the preceding claims wherein the second expansion element is substantially hook shaped adapted to engage a bar at the bottom.

8. A roof box for vehicles comprising:
- a box having a base defining a resting surface;
- a plurality of locking devices (1) in accordance with one or more of the preceding claims 1-7;
said base having a plurality of through seats each adapted to house the clamping device (4) of a respective locking device.

9. The roof box according to claim 8 wherein the first coupling element is stably constrained to the base of the box above the resting surface.

10. The roof box according to claim 8 or 9 wherein the second coupling element is movable with respect to the base of the box and positioned below the resting surface.

11. The roof box according to one or more of the preceding claims 8-10 comprising two pairs of locking devices, each pair being adapted to stably constrain the roof box to a respective bar of a vehicle.

12. The roof box according to claim 11 wherein the locking devices (1) of each pair are respectively coupled so that an expansion of the first locking element (2) of a locking device (1) causes the expansion of the first locking element (2) of the other locking device (1) of the pair.

13. The roof box according to one or more of the preceding claims wherein all the locking devices (1) are respectively coupled so that an expansion of the first locking element (2) of a locking device (1) causes the expansion of the first locking element (2) of each other locking device (1).

## Patentansprüche

1. Verriegelungsvorrichtung (1) für eine Dachbox, umfassend:
- ein erstes Verriegelungselement (2), das ausgelegt ist, um auf einer Auflagefläche untergebracht zu werden;
- ein zweites Verriegelungselement (3), das an das erste Verriegelungselement (2) festgespannt und in Bezug darauf entlang einer Verriegelungsachse (X) senkrecht zu der Auflagefläche bewegbar ist;
- eine Klemmvorrichtung (4), die konfiguriert ist, um einen relativen Abstand zwischen dem ersten und dem zweiten Verriegelungselement (3) zu variieren, der einen Klemmhub des zweiten Verriegelungselements (3) ausführt, und aufweisend ein erstes Ende (4a), das über dem ersten Verriegelungselement (2) positioniert ist und ein zweites Ende (4b), das in einem unteren Abschnitt des zweiten Verriegelungselements (3) festgespannt ist;
**dadurch gekennzeichnet, dass** das erste Verriegelungselement (2) elastisch verformbar ist und eine Expansionsvorrichtung (5) umfasst, die konfiguriert ist, um das erste Verriegelungselement (2) zu expandieren und seine Abmessungen entlang der Verriegelungsachse (X) zu vergrößern, um einen zusätzlichen Klemmhub zu erhalten.

2. Vorrichtung nach Anspruch 1, wobei die Expansionsvorrichtung (5) einen Griff (5a) und einen Nocken (5b) umfasst, der mit dem Griff (5a) assoziiert ist und ausgelegt ist, um zwischen einer Offenstellung, in der sich das erste Verriegelungselement (2) nicht expandiert ist und einer Klemmstellung, in der das erste Verriegelungselement (2) expandiert ist, zu drehen, wobei der Griff (5a) so konfiguriert ist, dass er die Drehung des Nockens (5b) von der Offenstellung in die Klemmstellung vermittelt.

3. Vorrichtung nach Anspruch 2, wobei das erste Verriegelungselement (2) einen inneren Hohlraum aufweist, der durch eine untere Fläche und eine obere Fläche begrenzt ist, und der Nocken (5b) im Inneren des Hohlraums angeordnet und zwischen der unteren Fläche und der oberen Fläche in Kontakt damit angeordnet ist.

4. Vorrichtung nach Anspruch 2 oder 3, wobei die erste Verriegelungsvorrichtung (2) einen Schlitz (A) aufweist, der oberhalb des Griffs (5a) der Expansionsvorrichtung (5) angeordnet ist, wenn sich der Nocken (5b) in der Klemmstellung entlang der Verriegelungsachse (X) befindet und zum Einführen eines Verriegelungskörpers, vorzugsweise eines Seils, konfiguriert ist, ausgelegt, um die Bewegung des Griffs (5a) zu verhindern.

5. Vorrichtung nach einem oder mehreren der vorhergehenden Ansprüche, wobei das erste Ende (4a) der Klemmvorrichtung (4) ein Schraubenkopf ist und das erste Verriegelungselement (2) einen gegengeformten oberen Abschnitt aufweist, der dazu ausgelegt ist, um zumindest teilweise einen unteren Abschnitt des Schraubenkopfes aufzunehmen.

6. Vorrichtung nach Anspruch 5, wobei der Schraubenkopf einen Innengewindesitz aufweist und das zweite Ende (4b) der Klemmvorrichtung (4) ein Gewindekörper ist, der dazu ausgelegt ist, in den Innengewindesitz einzugreifen und darin gemäß einer Auf-Abschraubbewegung entlang der Verriegelungsachse (X) zu gleiten.

7. Vorrichtung nach einem oder mehreren der vorhergehenden Ansprüche, wobei das zweite Expansionselement im wesentlichen hakenförmig ist, um mit einer Stange am Boden in Eingriff zu kommen.

8. Dachbox für Fahrzeuge, umfassend:
- eine Box aufweisend eine Basis, die eine Auflagefläche definiert;
- eine Vielzahl an Verriegelungsvorrichtungen (1) nach einem oder mehreren der vorhergehenden Ansprüche 1-7;
wobei die Basis eine Vielzahl an Durchgangssitzen aufweist, die jeweils dazu ausgelegt sind, um die Klemmvorrichtung (4) einer jeweiligen Verriegelungsvorrichtung unterzubringen.

9. Dachbox nach Anspruch 8, wobei das erste Kopplungselement stabil an der Basis der Box über der Auflagefläche festgespannt ist.

10. Dachbox nach Anspruch 8 oder 9, wobei das zweite Kopplungselement in Bezug auf den Boden der Box beweglich ist und unter der Auflagefläche positioniert ist.

11. Dachbox nach einem oder mehreren der vorhergehenden Ansprüche 8-10, umfassend zwei Paare von Verriegelungsvorrichtungen, wobei jedes Paar ausgelegt ist, um die Dachbox stabil an einer jeweiligen Stange eines Fahrzeugs festzuspannen.

12. Dachbox nach Anspruch 11, wobei die Verriegelungsvorrichtungen (1) jedes Paares jeweils so gekoppelt sind, dass eine Expansion des ersten Verriegelungselementes (2) einer Verriegelungsvorrichtung (1) die Expansion des ersten Verriegelungselementes (2) der anderen Verriegelungsvorrichtung (1) des Paares bewirkt.

13. Dachbox nach einem oder mehreren der vorhergehenden Ansprüche, wobei alle Verriegelungsvorrichtungen (1) jeweils so gekoppelt sind, dass eine Expansion des ersten Verriegelungselements (2) einer Verriegelungsvorrichtung (1) die Expansion des ersten Verriegelungselements (2) jeder der anderen Verriegelungsvorrichtung (1) bewirkt.

## Revendications

1. Dispositif de verrouillage (1) pour caisse de toit comprenant :
- un premier élément de verrouillage (2) pouvant être logé sur une surface d'appui ;
- un second élément de verrouillage (3) pouvant être fixé au premier élément de verrouillage (2) et mobile par rapport à lui le long d'un axe de verrouillage (X) perpendiculaire à ladite surface d'appui ;
- un dispositif de serrage (4) configuré pour varier une distance relative entre lesdits premier et second éléments de verrouillage (3) en réalisant une course de serrage du second élément de verrouillage (3) et en présentant une première extrémité (4a) positionnée au-dessus du premier élément de verrouillage (2) et une seconde extrémité (4b) fixée dans une partie inférieure du second élément de verrouillage (3) ;
**caractérisé en ce que** ledit premier élément de verrouillage (2) est élastiquement déformable et comprend un dispositif d'extension (5) configuré pour étendre ledit premier élément de verrouillage (2) en augmentant ses dimensions le long dudit axe de verrouillage (X) pour obtenir une course extra de serrage.

2. Dispositif selon la revendication 1, dans lequel ledit dispositif d'extension (5) comprend une poignée (5a) et une came (5b), associée à ladite poignée (5a), adaptée pour tourner entre une position d'ouverture dans laquelle le premier élément de verrouillage (2) n'est pas étendu et une position de serrage dans laquelle le premier élément de verrouillage (2) est étendu, ladite poignée (5a) étant configurée pour modérer la rotation de ladite came (5b) de la position d'ouverture à la position de serrage.

3. Dispositif selon la revendication 2, dans lequel le premier élément de verrouillage (2) présente une cavité interne délimitée par une surface inférieure et par une surface supérieure, et ladite came (5b) est disposée à l'intérieur de la cavité et interposée entre la surface inférieure et la surface supérieure en contact avec elles.

4. Dispositif selon la revendication 2 ou 3, dans lequel le premier dispositif de verrouillage (2) présente une fente (A) aménagée au-dessus de la poignée (5a) du dispositif d'extension (5), quand la came (5b) se trouve dans la position de serrage, le long de l'axe de verrouillage (X), et configurée pour l'introduction d'un corps de verrouillage, de préférence une corde, pouvant prévenir le mouvement de la poignée (5a).

5. Dispositif selon une ou plusieurs des revendications précédentes, dans lequel la première extrémité (4a) du dispositif de serrage (4) est une tête de vissage et le premier élément de verrouillage (2) a une partie supérieure contrefaçonnée pouvant recevoir au moins partiellement une partie inférieure de ladite tête de vissage.

6. Dispositif selon la revendication 5, dans lequel la tête de vissage a un logement avec intérieur fileté et la seconde extrémité (4b) du dispositif de serrage (4) est un corps fileté adapté pour se mettre en prise avec ledit logement avec intérieur fileté et coulisser à l'intérieur selon un mouvement de serrage/desserrage le long de l'axe de verrouillage (X).

7. Dispositif selon une ou plusieurs des revendications précédentes, dans lequel ledit second élément d'extension est essentiellement en forme de crochet pouvant se mettre en prise avec une barre dans le bas.

8. Caisse de toit pour véhicules comprenant :
- une caisse ayant une base formant une surface d'appui ;
- une pluralité de dispositifs de verrouillage (1) selon une ou plusieurs revendications précédentes 1 à 7 ;
ladite base présentant une pluralité de logements débouchants, adaptés chacun à loger le dispositif de serrage (4) d'un dispositif de verrouillage respectif.

9. Caisse de toit selon la revendication 8, dans laquelle le premier élément d'accouplement est fixé de manière stable à la base de la caisse au-dessus de la surface d'appui.

10. Caisse de toit selon la revendication 8 ou 9, dans laquelle le second élément d'accouplement est mobile par rapport à la base de la caisse et positionné en-dessous de la surface d'appui.

11. Caisse de toit selon une ou plusieurs des revendications précédentes 8 à 10, comprenant deux paires de dispositifs de verrouillage, chaque paire étant adaptée à fixer de manière stable la caisse de toit à la barre respective d'un véhicule.

12. Caisse de toit selon la revendication 11, dans laquelle les dispositifs de verrouillage (1) de chaque paire sont couplés respectivement pour qu'une extension du premier élément de verrouillage (2) d'un dispositif de verrouillage (1) provoque l'extension du premier élément de verrouillage (2) de l'autre dispositif de verrouillage (1) de la paire.

13. Caisse de toit selon une ou plusieurs des revendications précédentes, dans laquelle tous les dispositifs de verrouillage (1) sont couplés respectivement pour qu'une extension du premier élément de verrouillage (2) d'un dispositif de verrouillage (1) provoque l'extension du premier élément de verrouillage (2) de chaque autre dispositif de verrouillage (1).
